Europäisches Patentamt

European Patent Office

Office européen des brevets

(11) Numéro de publication: **0 416 991 A1**

# (12) DEMANDE DE BREVET EUROPEEN

(21) Numéro de dépôt: **90402429.6**

(22) Date de dépôt: **04.09.90**

(51) Int. Cl.5: **F16F 1/36**, B25D 17/04, B25D 17/11

(30) Priorité: **05.09.89 FR 8911574**

(43) Date de publication de la demande:
**13.03.91 Bulletin 91/11**

(84) Etats contractants désignés:
**DE ES FR GB IT**

(71) Demandeur: **SOCIETE ELECTROMECANIQUE DU NIVERNAIS - SELNI**
**1 à 6, rue des Grands Champs**
**F-58000 Nevers(FR)**

(72) Inventeur: **Hatiez, Isabelle**
**THOMSON-CSF SCPI Cédex 67**
**F-92045 Paris la Défense(FR)**
Inventeur: **Gaulier, Michel**
**THOMSON-CSF SCPI Cédex 67**
**F-92045 Paris la Défense(FR)**

(74) Mandataire: **Phan, Chi Quy et al**
**THOMSON-CSF SCPI**
**F-92045 PARIS LA DEFENSE CEDEX 67(FR)**

(54) **Anneau de montage.**

(57) Anneau de montage destiné à isoler un dispositif de son support contre des vibrations mécaniques engendrées par ce dispositif, caractérisé en ce qu'il est un anneau monobloc réalisé en matière synthétique résistante à la rupture, au cisaillement, à la compression et au flauge, et ayant une structure à découpures lui donnant une élasticité propre à amortir des vibrations mécaniques.

FIG.4

EP 0 416 991 A1

## ANNEAU DE MONTAGE

La présente invention concerne un anneau de montage.

Des dispositifs ou machines qui engendrent des vibrations mécaniques en fonctionnant, telles que des machines tournantes, sont souvent montés et isolés de leurs supports par des pièces intermédiaires qui absorbent ces vibrations afin d'en éviter une transmission mécanique à ces supports, car cette transmission donne naissance à une source de bruit gênant.

Certaines de ces pièces intermédiaires appelées des silentblocs sont habituellement réalisées avec un anneau en caoutchouc ou élastomère renforcé mécaniquement par des pièces additionnelles rigides en métal ou en résine thermodurcissable.

Ces pièces additonnelles rigides permettent de protéger mécaniquement l'anneau en caoutchouc ou élastomère et/ou de contenir ou limiter sa déformation sous la force du serrage des colliers de fixation et contribuer à maintenir une bonne stabilité et solidité du montage.

La réalisation et la mise en place des éléments constituants de ces silentblocs se révèlent longs et onéreux en coût de fabrication.

La présente invention ayant pour but d'éviter ces inconvénients permet de réaliser un anneau économique de montage ayant une structure simple, facile à réaliser et à mette en place et efficace dans un empêchement d'une transmission des vibrations mécaniques d'un dispositif ou machine à son support.

Selon l'invention, un anneau de montage destiné à isoler un dispositif de son support contre des vibrations mécaniques engendrées par ce dispositif est caractérisé en ce qu'il est un anneau monobloc réalisé en matière synthétique résistante à la rupture, au cisaillement, à la compression et au flauge, et ayant une structure à découpures lui donnant une élasticité propre à amortir des vibrations mécaniques.

Pour mieux faire comprendre l'invention, on décrit ci-après un silentbloc connu et un certain nombre d'exemples de réalisation de l'invention, illustrés dans des dessins ci-annexés dont :
- la figure 1 représente une vue schématique partielle en coupe d'un silentbloc connu monté sur le moyeu d'un flasque d'extrémité d'une machine électrique tournante,
- la figure 2 représente une vue éclatée du silentbloc de la figure 1,
- la figure 3 représente une vue schématique partielle en coupe d'un anneau de montage selon un premier exemple de réalisation de l'invention,
- la figure 4 représente une vue schématique en perspective de l'anneau de la figure 3,
- la figure 5 représente une vue schématique partielle en coupe d'un anneau de montage selon un deuxième exemple de réalisation de l'invention, et
- la figure 6 représente une vue schématique en perspective de l'anneau de la figure 5.

L'invention est applicable à un anneau de montage disposé entre un collier de serrage d'un support, et un dispositif qui comporte une portée tubulaire de fixation ou un moyeu, et destiné à amortir et à empêcher une transmission à ce support des vibrations mécaniques engendrées par ce dispositif autrement dit à isoler ce dispositif de son support contre les vibrations mécaniques.

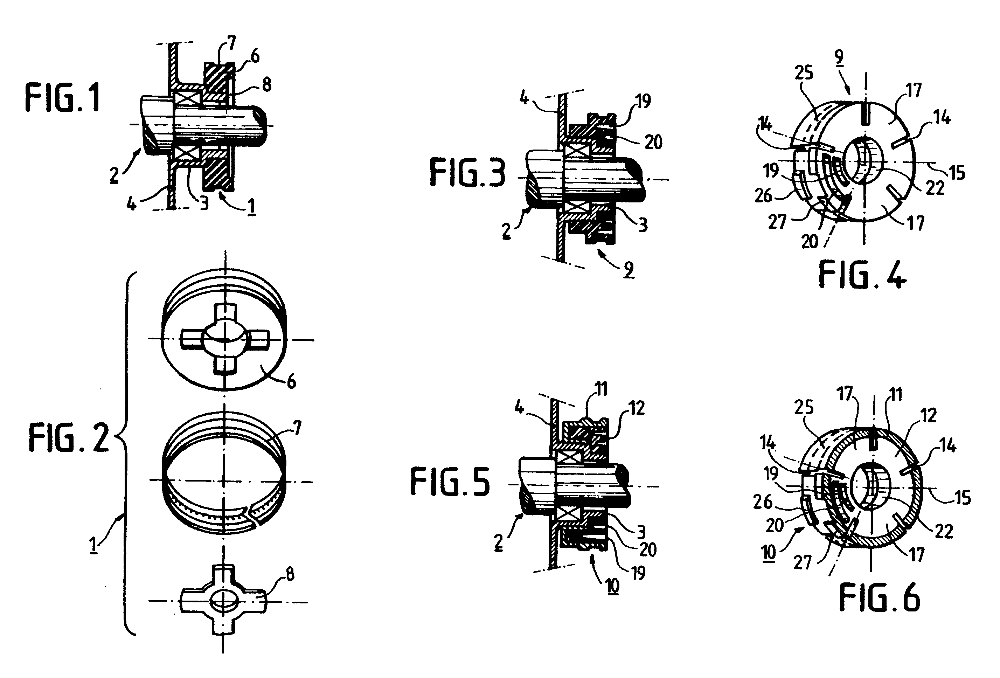

Un anneau de montage connu 1 illustré dans les figures 1 et 2 est destiné au montage d'une machine élastique tournante à axe horizontal 2 sur un support d'un type connu non représenté.

L'anneau de montage 1 est disposé entre d'une part une portée cylindrique d'un moyeu 3 d'un flasque 4 de la machine électrique tournante 2 et d'autre part un collier de serrage et de maintien d'un type connu non représenté faisant partie de ce support pour empêcher une transmission à ce support de vibrations mécaniques engendrées par cette machine électrique tournante.

Afin de remplir sa fonction, l'anneau de montage 1 doit avoir une certaine élasticité pour amortir les vibrations et une certaine résistance mécanique pour supporter sans défaillance la contrainte de serrage imposée par le collier et assurer un bon maintien en position de cette machine électrique sur le support.

L'anneau de montage 1 comprend à cet effet d'une part un anneau en caoutchouc ou élastomère 6 qui donne à l'anneau de montage 1 une élasticité indispensable à l'amortissement des vibrations et d'autre part une bague métallique fendue de cerclage 7 protégeant l'anneau en caoutchouc contre une pénétration d'un collier de serrage ou une déchirure provoquée par ce dernier, et un croisillon métallique à moyeu central sertissable 8 servant de flasque ou plaque d'arrêt empêchant un flauge ou déplacement axial de l'anneau élastique 6. La bague métallique de cerclage 7 et le croisillon métallique 8 sont traités d'une manière connue pour les prémunir contre toute oxydation. Dans une mise en place de l'anneau de montage 1, d'abord, l'anneau élastique en caoutchouc ou élastomère 6 est équipé de la bague métallique fendue de cerclage 7 pour le protéger et l'ensemble de ces deux pièces est enfilé sur la portée cylindrique du moyeu 3 du flasque 4 de la machine électrique 2, puis le croisillon métallique 8 est monté et serti au niveau de son moyeu sur le bout de cette portée cylindrique du moyeu 3 pour bloquer l'anneau en caoutchouc 6 en place. L'anneau de montage 1 est alors prêt à être introduit dans le collier de serrage et de maintien du support de la machine électrique tournante 2.

La fabrication de ces trois éléments 6, 7, 8 de l'anneau de montage 1 comporte plusieurs opérations indépendantes les unes des autres et relativement longues. Il en est de même pour leur mise en place sur le moyeu 3 du flasque 4 de la machine électrique tournante 2. Le coût de fabrication et de mise en place de l'anneau connu de montage 1 est par conséquent onéreux.

La présente invention permet d'éviter ces inconvénients.

Selon l'invention, un anneau de montage destiné à isoler un dispositif de son support contre des vibrations mécaniques engendrées par ce dispositif est un anneau monobloc réalisé en matière synthétique résistante au cisaillement, à la rupture, à la compression et au flauge, et ayant une structure à découpures lui donnant une élasticité propre à amortir des vibrations mécaniques. Cette matière synthétique est de préférence une matière thermoplastique moulable par coulée ou par injection, ayant un faible module de rigidité.

Selon un premier exemple illustré dans les figures 3 et 4, un anneau de montage 9 est un anneau simple réalisé avec une seule matière thermoplastique.

Dans un deuxième exemple illustré dans les figures 5 et 6, un anneau de montage 10 est un anneau composite réalisé avec deux variétés de matière thermoplastique, la première variété à résistance élevée à la rupture, au cisaillement, à la compression et au flauge formant par moulage une enveloppe partielle 11 de cet anneau 10 et la deuxième variété à résistance moins élevée à la rupture, au cisaillement, à la compression et au fluage formant par surmoulage dans cette enveloppe partielle 11 un corps 12 de cet anneau.

Selon une autre caractéristique l'anneau de montage 9 ou 10 comprend (figures 3 à 6) sur son pourtour des fentes 14 espacées, parallèles à son axe 15, et ouverte radialement et axialement.

Les fentes 14 divisent l'anneau en secteurs circulaires 17, lui donnent une bonne élasticité et permettent une diminution élastique du diamètre extérieur de cet anneau.

L'anneau de montage 9 ou 10 comprend de préférence un nombre impair de fentes 14 régulièrement espacées sur son pourtour où aucune fente n'est diamétralement en alignment avec une autre fente, ce qui favorise un contact continu entre cet anneau 9 ou 10 et les deux demi-parties d'un collier de serrage et de maintien d'un type connu faisant partie du support de la machine électrique 2, et évite une relative fragilité de l'anneau 9 ou 10 dans un cisaillement à son niveau diamétral.

L'anneau de montage 9 ou 10 comprend dans chacun de ses secteurs circulaires 17 un ou plusieurs évidement axiaux concentriques, radialement espacés 19, 20 qui renforcent son élasticité.

L'alésage 22 de l'anneau 9 ou 10 comprend une forme complémentaire à la portée cylindrique du moyeu 3 du flasque 4 de la machine électrique 2 et des dimensions qui permettent un montage serré de l'anneau 9 ou 10 sur cette portée du moyeu 3.

Le bord périphérique 25 de l'anneau 9 ou 10 qui définit une surface circulaire de contact avec un collier de serrage et de maintien faisant partie du support de la machine électrique 2 comprend sur les deux côtés latéraux de cette surface circulaire deux lignes parallèles 26, 27 et nervures espacées destinées à retenir ce collier de serrage et de maintien.

L'anneau de montage 9 ou 10 décrit ci-dessus est non seulement efficace par son élasticité dans une isolation de la machine électrique 2 de son support contre des vibrations mécaniques engendrées par cette machine et par conséquent une suppression d'une source de bruit gênant mais également économique grâce à la caractéristique monobloc de sa structure qui rend simple et rapide sa fabrication par moulage et/ou surmoulage et facile une automatisation de sa mise en place sur la machine électrique 2. Par ailleurs, une absence de pièces métalliques dans la structure de l'anneau de montage 9 ou 10 contribue à donner à cet anneau une meilleure caractéristique d'isolation électrique.

**Revendications**

1. Anneau de montage à fentes radiales destiné à isoler un dispositif de son support contre des vibrations mécaniques engendrées par ce dispositif, caractérisé en ce qu'il est constitué par un anneau monobloc réalisé en matière synthétique et ayant une structure à découpures comportant à la fois sur son pourtour des fentes (14) espacées, parallèles à son axe (15), ouvertes radialement et axialement divisant cet anneau en secteurs circulaires (17) et dans chacun de ces secteurs circulaires (17) un ou plusieurs évidement axiaux concentriques radialement espacés (19, 20).

2. Anneau selon la revendication 1, caractérisé en ce qu'il comprend un nombre impair de fentes (14) régulièrement espacées sur son pourtour.

3. Anneau selon l'une des revendications 1 et 2, caractérisé en ce qu'il est réalisé en une matière thermoplastique moulable par coulée ou par injection.

4. Anneau selon l'une des revendications 1 à 3, caractérisé en ce qu'il est un anneau composite (10) réalisé avec deux variétés de matière thermoplastique, la première variété à résistance élevée à la rupture, au cisaillement, à la compression et au flauge formant par moulage une enveloppe partielle (11) de cet anneau (10) et la deuxième variété à résistance moins élevée à la rupture, au cisaillement, à la compression et au flauge formant par surmoulage dans cette enveloppe partielle (11), un corps (12) de cet anneau (10).

FIG.1

FIG.2

FIG.3

FIG.4

FIG.5

FIG.6

EP 0 416 991 A1

**Office européen
des brevets**

**RAPPORT DE RECHERCHE
EUROPEENNE**

Numéro de la demande

**EP 90 40 2429**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 049 654   (THOMSON-BRANDT)<br>* page 1, ligne 1 - page 2, ligne 25; figures *<br>— — — | 1-3 | F 16 F 1/36<br>B 25 D 17/04<br>B 25 D 17/11 |
| A | US-A-4 626 726   (KING ET AL)<br>* colonne 2, ligne 5 - colonne 3, ligne 34 * * colonne 5, ligne 53 - colonne 6, ligne 49; revendication 3; figures *<br>— — — | 1,2 | |
| A | GB-A-1 131 608   (SALZGITTER MASCHINEN AG)<br>* le document en entier *<br>— — — | 1,2 | |
| A | US-A-4 385 025   (SALERNO)<br>* colonne 1, ligne 1 - colonne 2, ligne 65; figures *<br>— — — | 3,4 | |
| A | GB-A-8 354 47   (METALASTIK LTD)<br>* le document en entier *<br>— — — | 1 | |
| A | FR-A-2 428 768   (CAOUTCHOUC TEC.)<br>* page 1, ligne 1 - page 2, ligne 33; figures *<br>— — — — — | 1-3 | |

| DOMAINES TECHNIQUES RECHERCHES (Int. Cl.5) |
|---|
| F 16 F<br>B 25 D<br>H 02 K |

Le présent rapport de recherche a été établi pour toutes les revendications

| Lieu de la recherche | Date d'achèvement de la recherche | Examinateur |
|---|---|---|
| La Haye | 30 novembre 90 | BOLJANAC T. |

CATEGORIE DES DOCUMENTS CITES
X : particulièrement pertinent à lui seul
Y : particulièrement pertinent en combinaison avec un
    autre document de la même catégorie
A : arrière-plan technologique
O : divulgation non-écrite
P : document intercalaire
T : théorie ou principe à la base de l'invention

E : document de brevet antérieur, mais publié à la
    date de dépôt ou après cette date
D : cité dans la demande
L : cité pour d'autres raisons
------------------------------------------------
& : membre de la même famille, document
    correspondant